# EUROPEAN PATENT APPLICATION

(11) **EP 1 744 188 A2**
(43) Date of publication of application: **17.01.2007**
(21) Application number: 06117267.2
(22) Date of filing: 14.07.2006
(51) Int. Cl.: G02B 5/32, G02B 13/00, G02B 15/14

(54) **Compact lens for digital image acquisition and image acquisition device**

(30) Priority: 15.07.2005 DE 102005033746; 13.02.2006 US 772541
(71) Applicant: Schott AG, 55122 Mainz (DE)
(72) Inventor: Pawlowski, Edgar, 55271, Stadecken-Elsheim (DE); Brinkmann, Matthias, 55252, Mainz-Kastel (DE); Beier, Prof. Dr. Wolfram, 55270, Essenheim (DE)
(74) Representative: Patentanwälte Kewitz & Kollegen

(57) **Abstract**

The invention relates to a compact lens with fixed or variable focal length for digital image acquisition.

According to the invention, a refractive optical element of the lens or a group of elements on a light entry side of the lens is provided as a compound lens having a first lens element from a glass or optical ceramics with a first index of refraction and a second lens element from a plastic with a second index of refraction which is smaller than the first index of refraction, the first lens element being located on the beam path in front of the second lens element and on a light entry side of the lens. The lens also comprises at least one diffractive optical element. With a compactly built lens, imaging errors can thus be minimized by simple means. The diffractive optical element directly on or at a transparent cover is preferably made or provided for covering the detector array.

Another aspect of the invention relates to a digital image acquisition device with such a lens.

## Description

### FIELD OF THE INVENTION

This invention relates in general to lenses and devices for digital image acquisition and relates in particular to a lens of compact configuration with a fixed focal length or variable focal length (zoom lens) for digital image acquisition in mobile information technology devices such as, for example, cell phones or PDAs, as well as a mobile information technology device, especially a data terminal, with such a lens.

### BACKGROUND OF THE INVENTION

Digital image acquisition increasingly necessitates compact lenses, i.e., lenses with a comparatively short overall length. This applies especially to digital image acquisition in data terminals such as, for example, PDAs or cell phones, where as flat a device geometry as possible is desired. With increasing integration density in microelectronics, currently digital image acquisition chips are also available, for example also as CCD image sensors or CMOS image sensors, with several million image acquisition elements on an extremely small surface; this will also make high image definition desirable in the future for comparatively flat mobile devices, such as the aforementioned mobile data terminals. Thus, there is an increasing demand for compact lenses with a short overall length that enable very high image definition and that are to be produced as economically as possible.

Cost-efficient lenses as an imaging optical element are known, particularly in the field of analog single-lens cameras, particularly disposable cameras. Thus, for example, US 5,581,405 discloses an achromatic hybrid lens with a refractive basic element made of convex lens surfaces on the one lens surface of which there are diffractive structures which can be provided by means of press-forming the lens, injection molding from a plastic or by means of reworking of the one lens surface.

EP 1 193 512 A2 discloses a further diffractive optical element and an optical system provided therefrom.

US 6,157,494 and US 2005/0068637 A1 disclose a compact zoom lens which is provided with a diffractive optical element for correcting chromatic aberration. The lens has a comparatively complex structure and consequently is not suitable as a compact lens in the meaning of the present application for digital image acquisition, particularly for digital image acquisition in mobile applications such as, for example, data terminals.

US 6,072,634 discloses a compact lens with a fixed focal length for digital cameras, which comprises four lenses manufactured by injection molding from a plastic, wherein diffractive optical structures are formed on one surface of one of the lenses, in order to suitably affect the chromatic aberration. The diffractive lens surface is disposed close to an aperture provided in the lens. For the exact alignment of the single lenses, they are provided with peripheral structures acting as an alignment flange, which are formed by subsequent twisting away of the structures, which is comparatively complex and expensive.

### SUMMARY OF THE INVENTION

The object of this invention is to make available a lens with fixed or variable focal length for digital image acquisition that has a compact structure and can be produced economically and easily, and that is designed to enable high image definition, especially for digital image acquisition in mobile applications, for example for digital cameras, in cell phones, mobile data terminals, particularly PDAs, or else for applications in the automotive domain, for example for shoulder detection, for detection of individuals or obstacles, or for lenses for image acquisition when driving in reverse. According to another aspect of this invention, a digital image acquisition device with at least one such lens will also be made available.

According to a first aspect, the invention proceeds from a compact lens having a fixed focal length for digital image acquisition that comprises two or three, preferably two, refractive optical elements and at least one diffractive optical element to image incident light onto a detector array. According to the invention, the lens is characterized in that an imaging refractive optical element is provided as a compound or hybrid lens with a first lens element from a glass or from optical ceramics with a first index of refraction and with a second lens element from a plastic with a second index of refraction, which is smaller than the first index of refraction, wherein the first lens element is disposed in the beam path in front of the second lens element and at a light entry side of the lens. The incident light is therefore already relatively strongly refracted at the light entry side of the lens, which greatly reduces the overall length of the lens and considerably reduces imaging errors of the lens. In the case of such a compound or hybrid lens, the two lens elements are interconnected by material bonding and are preferably provided as single lenses, for example by injection molding plastic lenses or by pressing glass lenses. The material-bonded connection is preferably made by bonding, but can also be made by means of gluing or glass bonding.

According to another aspect the invention proceeds from a compact zoom lens with variable focal length for digital image acquisition, with at least two imaging optical element groups and at least one diffractive optical element, in order to image incident light onto a detector array. According to the invention, the zoom lens is characterized in that a refractive element of an element group at one light entry side of the lens is made as a compound lens with a first lens element from a glass or from optical ceramics with a first index of refraction and with a second lens element from a plastic with a second index of refraction, which is smaller than the first index of refraction, the first lens element being located on the beam path in front of the second lens element and at the light entry side of the lens. By this means the incident light is already relatively highly refracted at the light entry side of the lens, which greatly reduces the overall length of the lens and considerably reduces imaging errors of the lens. In the case of such a compound or hybrid lens, the two lens elements are interconnected by material bonding and are provided preferably as single lenses, for example by injection molding plastic lenses or by pressing glass lenses. The material-bonded connection is preferably made by means of bonding, but can also be achieved by means of gluing or glass bonding.

Suitable material combinations for achieving an advantageously compact lens comprise a glass with an index of refraction n > 1.6 as the material with the first index of refraction. Suitable glasses are, for example, glasses with low Tg such as, e.g., N-LASF47 from Schott, K-VC89 from Sumita or S-LAH79 from OHARA, and all other optical glasses, e.g., N-SF6 or else N-SF66 or else LASF35 from Schott. As the material with the second index of refraction, a plastic is expediently provided with an index of refraction n < 1.6. Such a plastic can be selected in particular from a group of plastics comprising the following: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes, and silicones.

According to another embodiment, at least one diffractive optical element is provided on a refractive optical element. Expediently, such a refractive optical element is an optical lens, or else a compound or hybrid lens, which comprises two material-bonded interconnected single lenses. Since according to the invention only two or three refractive optical elements, particularly lenses, are provided, the lens according to the invention can be produced with a very short overall length which, compared with lenses with more lenses, results in a substantial reduction of the construction volume. Further significant costs can thus be saved according to the invention. At the same time imaging errors can be effectively compensated by means of the at least one diffractive element.

According to another embodiment, at least one diffractive optical element is made or provided directly on or at a transparent cover of a detector array. By this means the light imaged onto the detector array can more suitably be corrected directly in front of the detector array; this further increases important features of the lens, such as, e.g., imaging quality, image contrast and signal intensity, since the light sensitivity of the conventional detector arrays, especially of CCD chips or CMOS chips, is ordinarily highly dependent on the angle of incidence of the incident light. The higher sensitivity makes possible lenses with a smaller overall length.

In particular, lenses with comparatively small diameters can also be realized according to the invention, which at the same f-number of the lens contributes to a further reduction of the lens length. The arrangement or making of a diffractive optical element directly in front of or on the transparent cover also makes possible a still more effective compensation of the chromatic aberration of the lens.

According to another embodiment the diffractive optical element is made integral with the transparent cover. This can be implemented by, for example, making a diffraction grating, a Fresnel zone plate, from phase-active structures or the like in or on the transparent cover. The diffractive optical structures can be implemented by stamping, especially hot stamping, or by other suitable hot forming of the surface of the transparent cover or by other surface structuring processes such as etching (WCE, RIE, IBE, CAIBE) or else by laser ablation processes (UV laser, femto-second laser) or else by additive vapor deposition processes. According to another embodiment, a plastic or glass film can also be applied to the transparent cover and is further structured by stamping, especially hot stamping, or by other suitable hot forming in order to make a diffractive optical element.

According to another embodiment, the two lens elements of the compound lens are made as single lenses and are interconnected by material bonding.

According to another embodiment, an overall length L of the lens is smaller than or equal to a focal length f of the lens: L ≤ f. The lens according to the invention is therefore clearly below the conventional design limits for the design of compact lenses with a fixed focal length.

According to another embodiment the two diffractive optical elements are provided or made at or on mutually opposing boundary surfaces (interfaces) of two adjacent optical elements, of which one optical element is a refractive optical element.

According to another embodiment, two diffractive optical elements are provided in the lens at or on boundary surfaces (interfaces) of two adjacent optical elements, which surfaces face away from one another, one optical element being a refractive optical element.

According to another embodiment, the two diffractive optical elements in the lens are made from a material with the same index of refraction, an intermediate space between the two adjacent optical elements being filled with a transparent filler material with an index of refraction and an Abbe coefficient that is different from - is in particular smaller than - the index of refraction of the two diffractive optical elements and the two adjacent optical elements. With the transparent filler material, according to the invention another parameter is available for suitably influencing the imaging properties of the lens, especially the chromatic aberration and chromatic diffraction efficiency.

According to another embodiment, the index of refraction and the Abbe coefficient of the transparent filler material are selected such that the relationship between the light diffraction of the two diffractive optical elements and the wavelength of the light to be imaged is made uniform.

According to another embodiment, the filler material in the intermediate space is a plastic or a polymer whose Abbe coefficient is smaller than the Abbe coefficient of the material of the diffractive optical elements so that the transparent filler material dictates a comparatively strong dispersion.

According to another embodiment, the diffractive optical elements are made from a plastic.

According to another embodiment, the diffractive optical elements are made from a plastic that is selected from a group comprising the following: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes, and silicones; and the intermediate space is filled with another plastic or polymer that is selected from the aforementioned group.

According to another embodiment, the diffractive optical elements are made from a glass with a low processing temperature Tg, preferably with a processing temperature Tg < 1000°C, and more preferably with a processing temperature Tg < 700°C.

According to another embodiment, the diffractive optical elements are formed from a glass with a low Tg that is selected from a group comprising: glass with low Tg such as, e.g., N-LASF47 from Schott, K-VC89 from Sumita or else S-LAH79 from OHARA, and all other optical glasses such as, e.g., N-SF6, N-SF66 or else LASF35 from Schott; and the intermediate space is filled with a plastic or polymer that is selected from a group comprising the following: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes and silicones.

According to another embodiment, the diffractive optical elements are formed from raised diffractive sections whose maximum height H is given by: H ≤ N λ / An, wherein λ designates a minimum wavelength of the light to be imaged, An is an absolute value of a difference of the index of refraction of the material of the diffractive optical elements and of the filler material, and N is an integer number between N=1 and N=20.

According to another embodiment, the diffractive optical element is made in each case by hot forming, especially by hot stamping, or by other surface structuring processes such as etching (WCE, RIE, IBE, CAIBE) or else by laser ablation processes (UV laser, femto-second laser) or else by additive vapor deposition processes of a surface of an optical lens or an optical element.

Another aspect of the present invention relates to a digital image acquisition device, especially a cell phone camera, with a solid body detector in the form of a detector array for digital image acquisition, with a lens as described above.

### LIST OF FIGURES

The invention will be described below by way of example and with reference to the attached drawings, from which other advantages, features and objects to be achieved will become apparent and wherein:
Fig. 1 shows a schematic sectional view of a lens according to a first embodiment of the present invention;
Fig. 2 shows a schematic sectional view of a lens according to a second embodiment of the present invention;
Fig. 3 shows a schematic sectional view of a lens according to a third embodiment of the present invention;
Fig. 4 shows the grid distortion of a lens according to the present invention;
Fig. 5 to 7 show various optical properties of a lens according to the present invention;
Fig. 8 shows the transmission of a lens according to the invention, applied over the lens radius;
Fig. 9 to 11 show, corresponding to Fig. 5 to 7, various optical properties of a conventional lens, whose optical lenses are made according to the optical lenses of the lens according to Fig. 5 to 7, but does not comprise a diffractive optical element according to the present invention;
Fig. 12a and 12b show schematically in a top view and in a lateral view a cell phone with camera optics according to the present invention;
Fig. 13 shows a schematic sectional view of a conventional compact zoom lens without a diffractive optical element;
Fig. 14 and 15 show optical properties of the zoom lens according to Fig. 13;
Fig. 16 shows a schematic sectional view of a compact zoom lens according to a further embodiment of the present invention;
Fig. 17 and 18 show optical properties of the zoom lens according to Fig. 16; and Fig. 19

In all the figures identical reference numberals denote identical or equivalent elements or element groups.

### DETAILED DESCRIPTION OF EXEMPLARY EMBODIMENTS

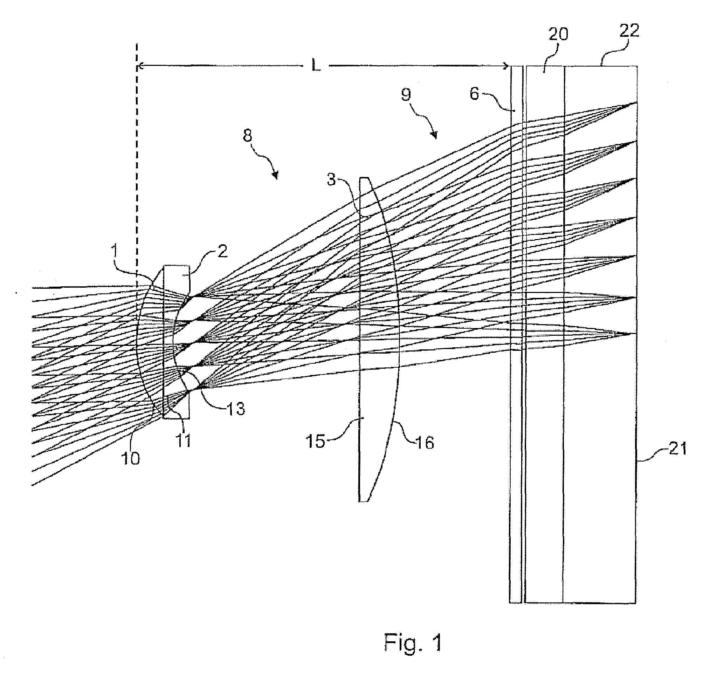

Fig. 1 shows a schematic sectional view of a compact lens according to a first embodiment of the present invention. According to Fig. 1, the lens comprises, in the direction of the beam path from the object plane to the image plane on the detector array 21, a first lens 1, which is provided as a piano-convex lens, a second lens 2, which is provided as a piano-concave lens, a third lens 3, which is provided as a plano-convex lens, and a disk-shaped diffractive optical element (hereinafter DOE) 6. The DOE 6 is disposed directly in front of a transparent cover 20 serving as an optical and mechanical protection for a detector array 21 accommodated in the housing 22 and consists, for example, of a glass or plastic disk. The transparent cover 20 can be provided with a filter, for example for filtering spectral ranges outside the visible wavelength range (wavelength about 400 to 700 nm), particularly of infrared radiation (wavelength > 700 nm). All optical elements can be provided with suitable antireflection coatings to increase the transmission of the lens in the known manner. As will be obvious without further explanation to one skilled in the art, the height of the housing 22 including the transparent cover 20 is comparatively small, namely in the magnitude of about 1 mm or less, in order to make possible as compact an image acquisition device as possible.

According to Fig. 1, the first lens 1 has a convex front side 10 and a planar rear side 11 in contact with the planar front side of the second lens 2, which is provided with a concave curved rear side 13. According to Fig. 1, the two lenses 1, 2 are interconnected in order to form a compound lens with a first lens element 1 from a material with a first index of refraction and with a second lens element 2 from a material with a second index of refraction smaller than the first index of refraction. By this means light incident at the front side 10 of the diffractive lens element 1 is refracted relatively strongly, which contributes effectively to a reduction of the overall length of the lens according to the invention. In principle, the two lenses 1, 2 can be interconnected by means of gluing. The integral provision of the lens elements as single lenses connected by bonding to the compound lens has proven particularly suitable.

The use of glass for the first lens element 1 and of a plastic for the second lens element 2 has proven expedient. The second lens element 2 can thus be made by simple forming, particularly injection molding, of a plastic onto the planar rear side of a plano-convex lens base element and by stamping the plastic at a temperature below a softening temperature or processing temperature Tg of the glass of the first lens element 1, thereby reducing the manufacturing costs. The first lens element 1 also makes it possible to provide a particularly stable and non-susceptible lens surface, which is in particular comparatively scratch-resistant and attracts few contaminants, at the lens entry surface of the lens, which is of advantage especially for applications without a protective transparent cover in front of the lens.

To achieve a small overall length of the lens for the compound lens made from the first and second lens elements 1, 2 it has proven particularly expedient to have a combination of a comparatively high refractive glass type or even of optical ceramics and a low refractive plastic. By way of example the following material combinations for the material of the first and second lens elements 1, 2 are specified below: the material with the first index of refraction can be a glass with low Tg, for example a glass which has been selected from a group comprising: glasses with a low Tg, such as, e.g., N-LASF47 from Schott, K-VC89 from Sumita or else S-LAH79 from OHARA, and all other optical glasses, such as, e.g., N-SF6, N-SF66 or else LASF35 from Schott, or else optical ceramics such as, e.g., Lumicera from Murata; and the material with the second index of refraction can be, e.g., a plastic, preferably selected from a group of plastics, comprising: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes and silicones.

According to Fig. 1, the plano-convex lens 3 has a planar front side 15 and a convex curved rear side 16 and is made expediently from glass, but according to another embodiment can also be made from a plastic.

To realize a compact lens design the intermediate spaces 8, 9 between the lenses are kept minimal. According to another embodiment, at least one of the intermediate spaces 8, 9 is filled with a plastic or polymer. The dispersion properties of this "filler material" can further affect the optical imaging properties of the lens advantageously. The dispersion of the filler material can further strengthen, or at least partially compensate, the wavelength dependency of the at least one DOE provided in the lens (reference number 6 according to Fig. 1), as hereinafter explained in more detail. The selection of the filler material thus makes available a further parameter according to the invention for affecting the optical imaging properties and for reducing the overall length of the lens.

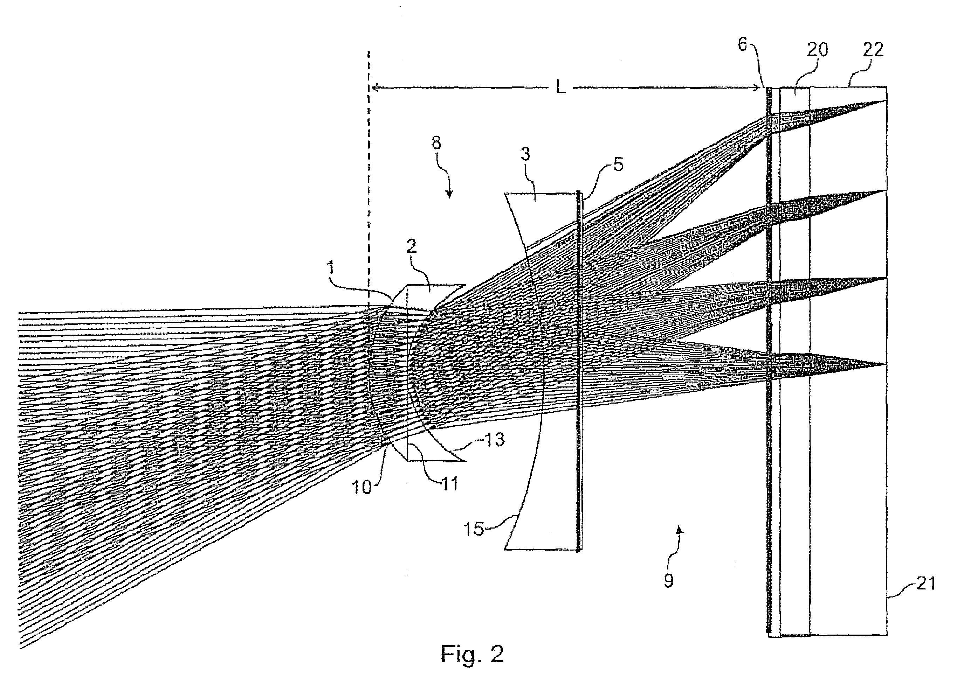

Fig. 2 shows a sectional view of a lens according to a second embodiment of the present invention. According to Fig. 2, the third lens 3 is made as a plano-concave lens, with a concave curved front side 15 and a planar rear side. According to Fig. 2, a DOE 5 is made or provided on or directly at the rear side of the third lens 3. According to Fig. 2, on or directly at the front side of the transparent cover 20 there is a further DOE made or provided. The two DOEs 5, 6 are thus provided at or on directly opposing surfaces (a so-called "close-cascade" arrangement) and can be designed such that the wave length dependencies of the diffraction efficiency of the two DOEs 5, 6 are substantially mutually fully compensated. Also in the case of the second embodiment at least the second lens intermediate space 9 is filled with a filler material of suitable dispersion, as described above. Naturally the first intermediate space 8 can also be filled with a filler material of suitable dispersion.

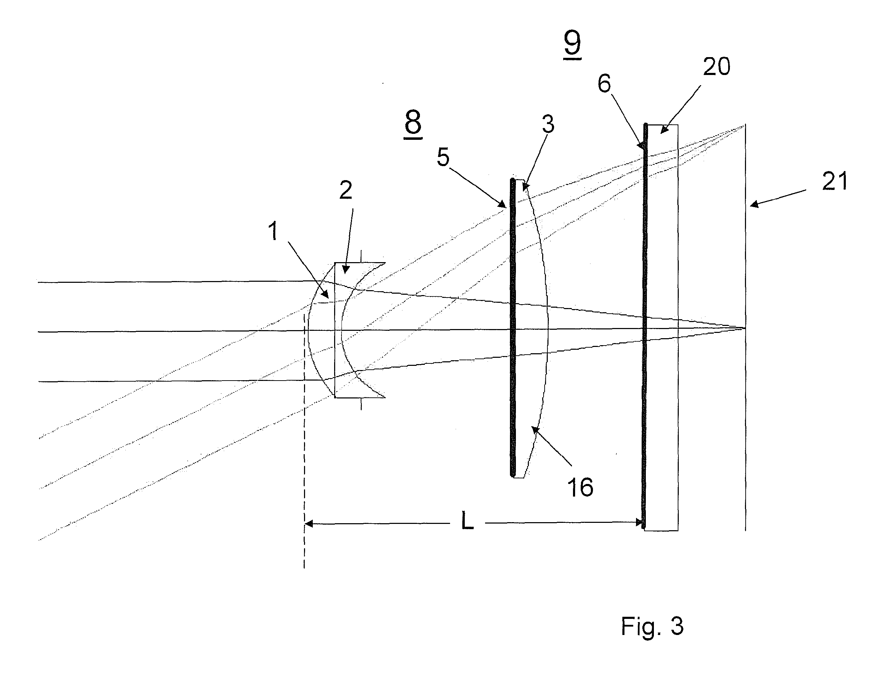

Fig. 3 shows a sectional view of a lens according to a third embodiment of the present invention. According to Fig. 3, the third lens 3, as also in the case of the first embodiment, is provided as a plano-convex lens, with a planar front side and a convex curved rear side 16. As can be seen in Fig. 3, a first DOE 5 is made or provided on or directly at the front side of the third lens 3, so that the two DOEs 5, 6 are made or provided on or at boundary surfaces facing away from one another of the adjacent optical elements 3, 20.

The lens intermediate spaces 8, 9 are advisably filled with a plastic or polymer with a smaller Abbe coefficient than the material of the element bounding the respective lens intermediate space, in order to be able to achieve even greater dispersion.

The elements of the lens are rotationally symmetric and are accommodated in a tubular lens tube (not shown). Although not shown in the figures, suitable apertures can basically be provided in the lens intermediate spaces 8, 9, particularly for reducing scattered light. To manufacture the lens, initially the optical elements with refractive action are provided. Subsequently the at least one DOE is made available, expediently by making or disposing it directly on one surface of one of the diffractive optical elements or of the transparent cover of the detector array. The optical elements and the transparent cover are aligned along the optical axis and disposed exactly parallel to one another. Subsequently the lens intermediate spaces are filled with a suitable plastic or polymer. By means of this measure the selected aligned and parallel arrangement of the optical elements is permanently fixed. In this manner a lens with a fixed focal length is made according to the invention.

The two intermediate spaces according to Fig. 1 to 3 can also be filled in different work stages because the geometry in the case of the lens according to Fig. 1 to 3 can be selected such that, after filling a lens intermediate space, surfaces are provided which are mutually plane-parallel, which can be used for further alignment of the optical elements to fill the other lens intermediate space. Thus, in the case of the embodiment according to Fig. 1 to 3, initially the second lens intermediate space 9 can be filled with a plastic or polymer, in which case after this filling a tubular body with two plane-parallel surfaces (Fig. 1 and 3: rear side of the transparent cover and front side 15 of the third lens) is provided.

Although not set forth above in more detail, when studying the above description one skilled in the art will easily see that the curved surfaces of the refractive optical elements 1-3 can optionally be made as spherical, aspherical or as free-form surfaces.

The diffractive structures can be made as surface phase elements according to the invention. For example, Fresnel zone plates or polynomial-shaped phase elements are mentioned, which consist on the surface of an arrangement of binary or else blazed or else saw-tooth structures of changing period. The raised sections project into the adjacent lens intermediate space filled with a plastic or polymer. For the maximum height H of the raised sections the following applies: H ≤ N λ / Δn, wherein λ designates a minimum wavelength of the light to be imaged, An is an absolute value of a difference of the index of refraction of the material of the diffractive optical elements 5, 6 and of the filler material, and N is an integer number between 1 and 20.

The diffractive structures according to the invention can be made by structuring a surface of a diffractive optical element, for example of an optical lens or of a transparent glass or plastic cover of a detector array. Manufacturing processes are listed by way of example as: precision molding, etching including WCE (wet chemical etching), dry etching, IBE (ion beam etching), CAIBE (chemically assisted ion beam etching), mechanical working, injection molding, hot stamping, laser ablation. For the purpose of hot stamping by way of example another glass or plastic layer can be applied to the surface of a glass or plastic substrate, e.g., of an optical lens or of a transparent cover of a detector array, in particular it can be spun on or pressed on, which melts at a lower temperature than the substrate material. Naturally other structuring processes are also possible in principle for forming the diffractive optical structures.

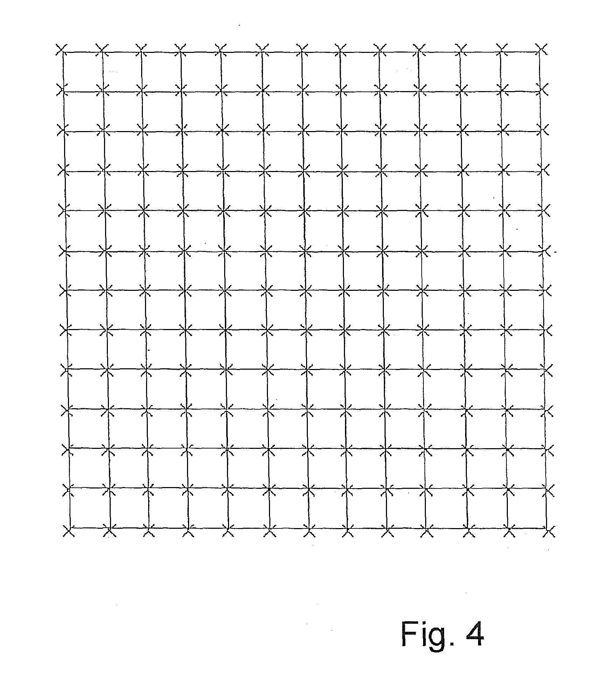

Fig. 4 shows the measured grid distortion of a lens according to the invention with an overall length L=4.9 mm and a focal length f=6.7 mm. On the imaging plane shown in Fig. 4 with the dimensions 4.24 x 4.24 mm, a maximum distortion (grid distortion) of 0.8% was measured.

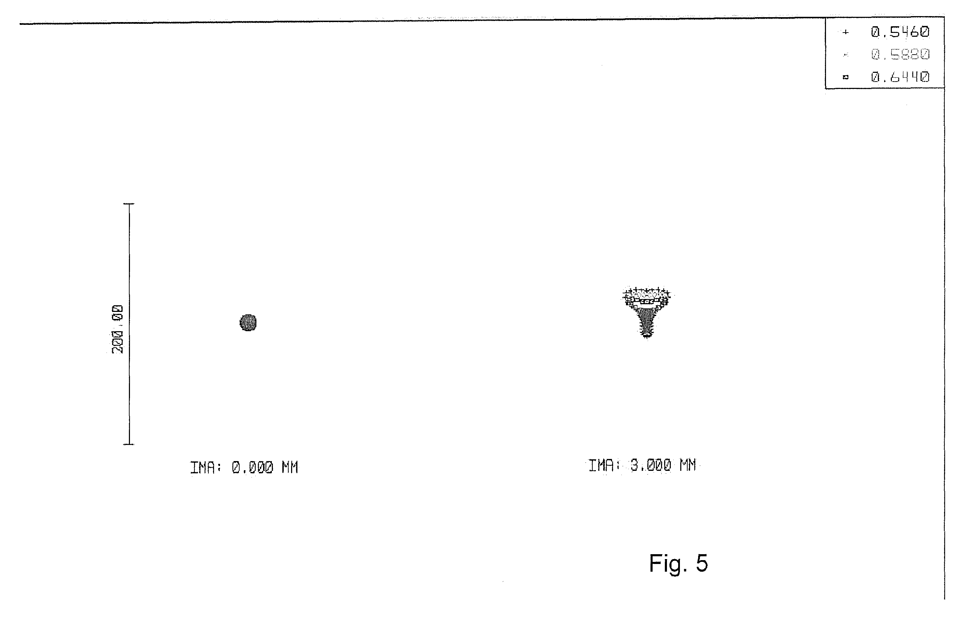

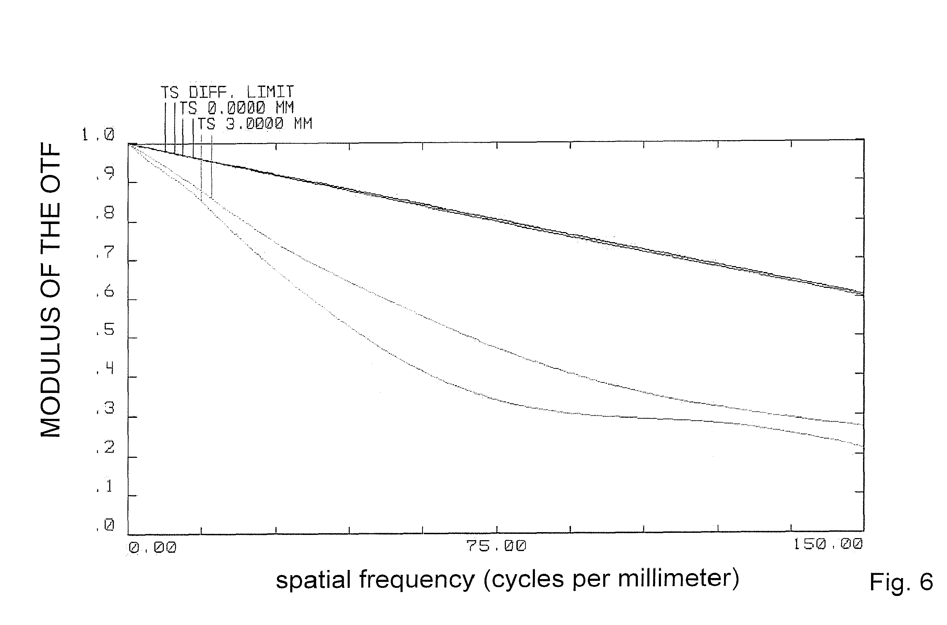

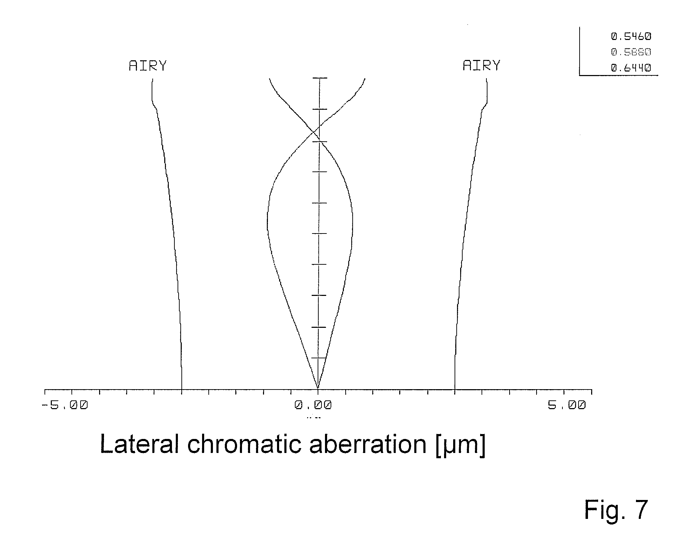

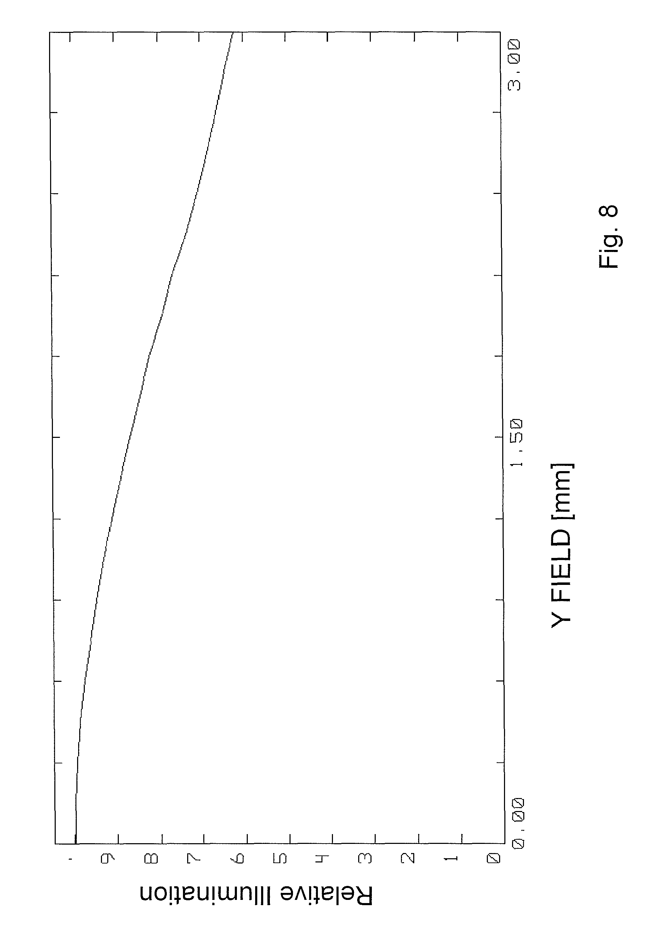

Fig. 5 to 7 summarize various optical properties of a lens according to the present invention. The lens had an overall length L=4.9 mm (cf. Fig. 1). In Fig. 5 is shown the focusing of incident light onto a light spot close to the center and at about 3.0 mm remote from the lens center. As shown, a spot size of about 2.1 µm was determined on the optical axis (close to the center) and of about 8.8 µm for the margin beam. Fig. 6 shows the modulation transfer function (MTF) for central beams and beams which are incident 3.0 mm remote from the lens center. Finally Fig. 7 shows the lateral chromatic aberration. Fig. 8 finally shows for a lens according to the invention the transmission of the lens as a factor of the lens radius, expressed as the relative intensity of the transmitted light.

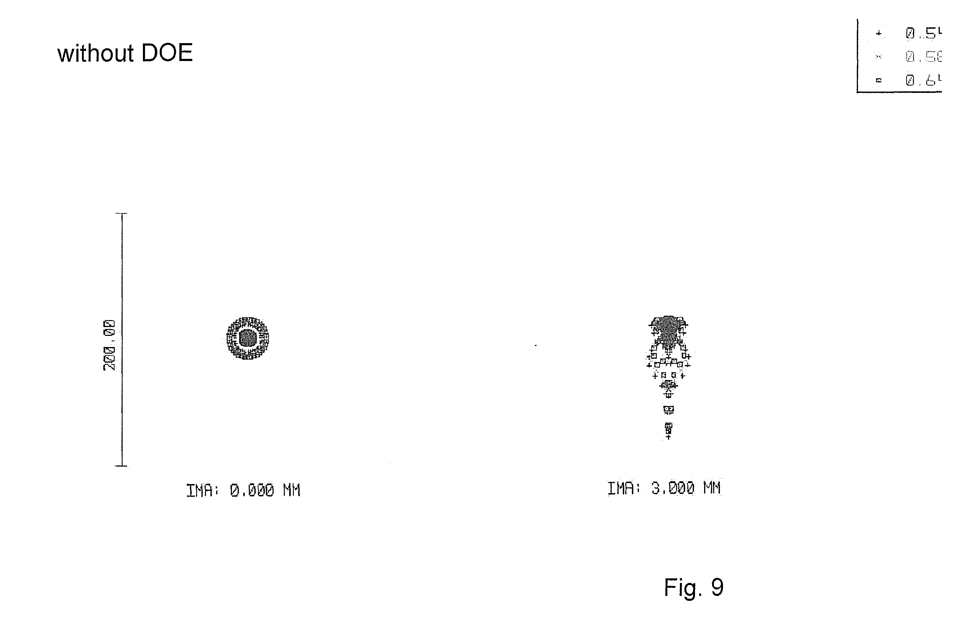

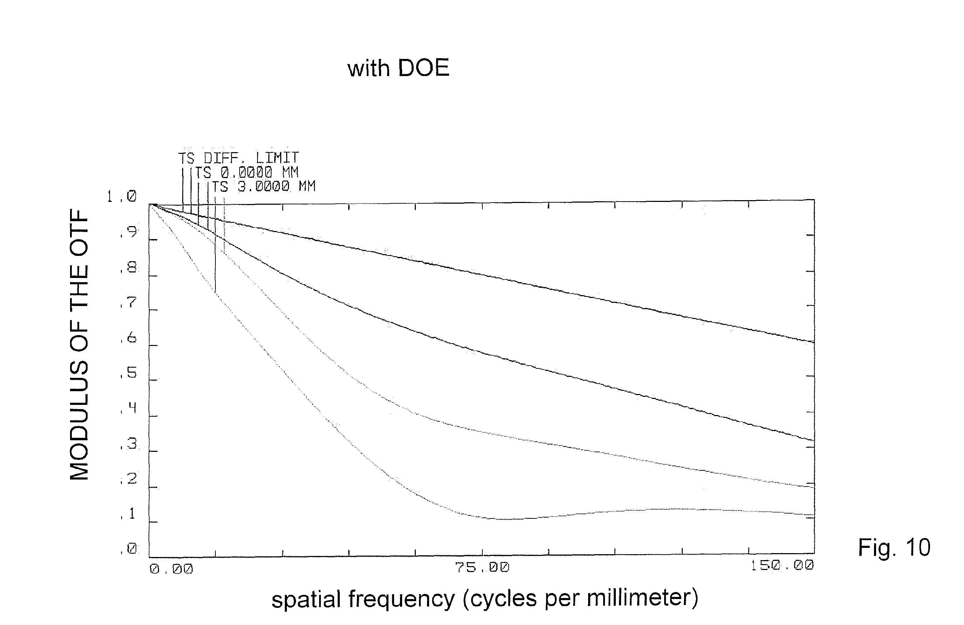

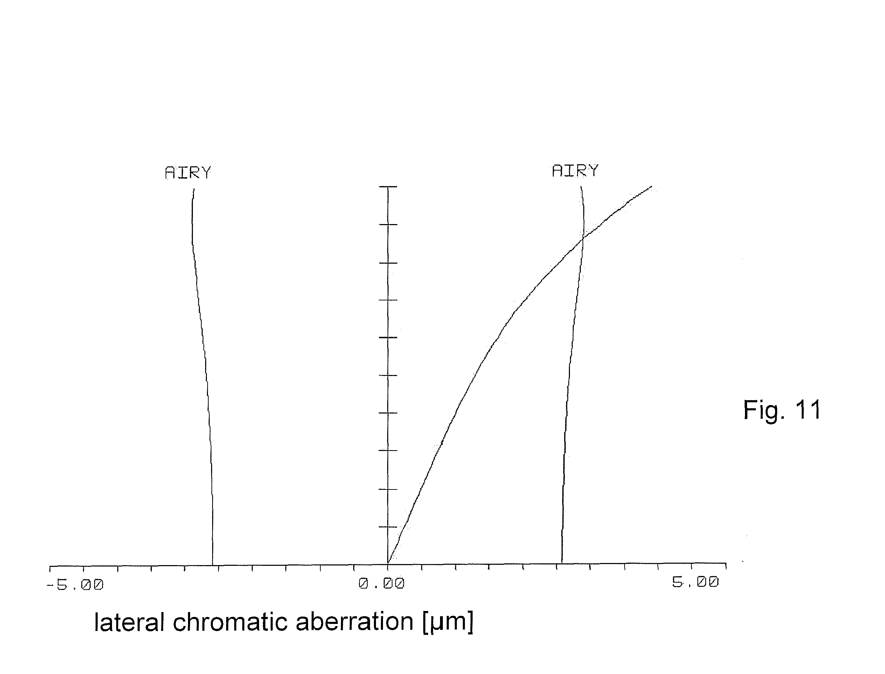

Fig. 9 to 11 show corresponding to Fig. 5 to 7 various optical properties of a lens whose optical lenses are made corresponding to the optical lenses of the lens according to Fig. 5 to 7, which however does not comprise a diffractive optical element (DOE) according to the present invention. The overall length (cf. Fig. 1) of the lens is L=5.5 µm. According to Fig. 9, a spot size of about 7.5 µm close to the center and of about 19.1 µm at a distance of 3.0 mm from the lens center was measured.

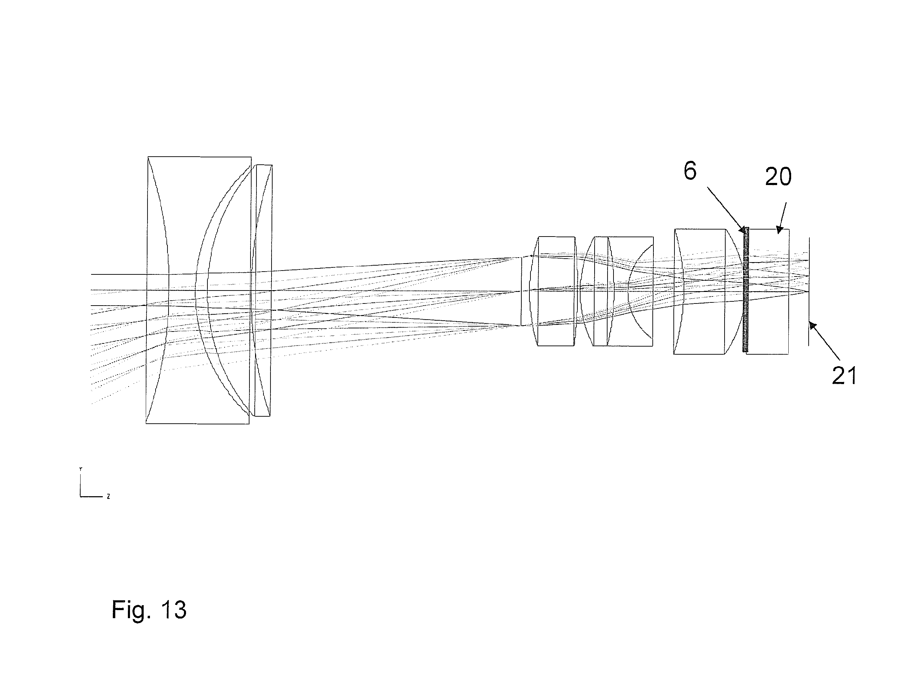

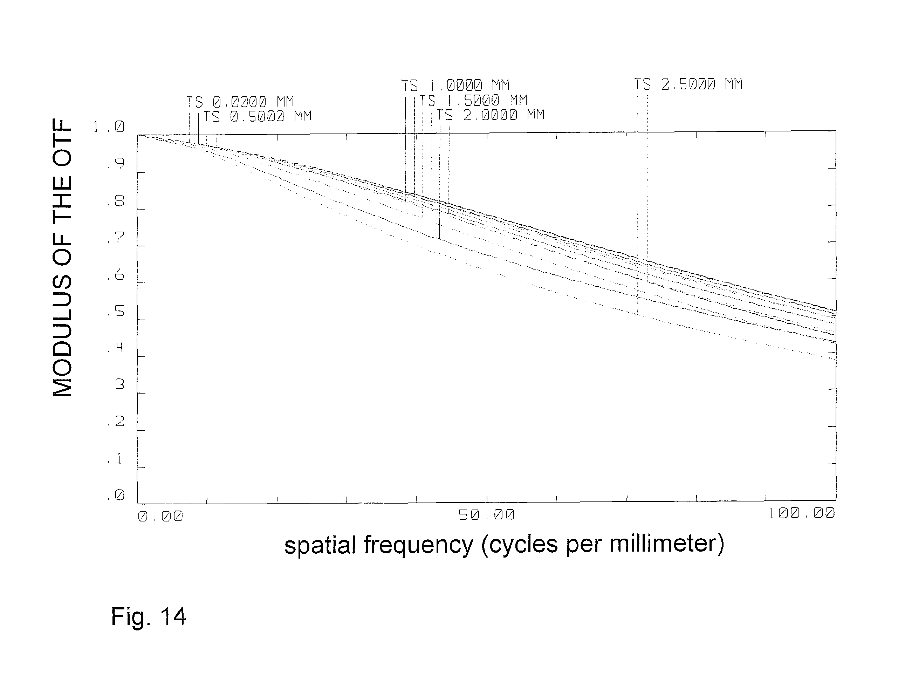

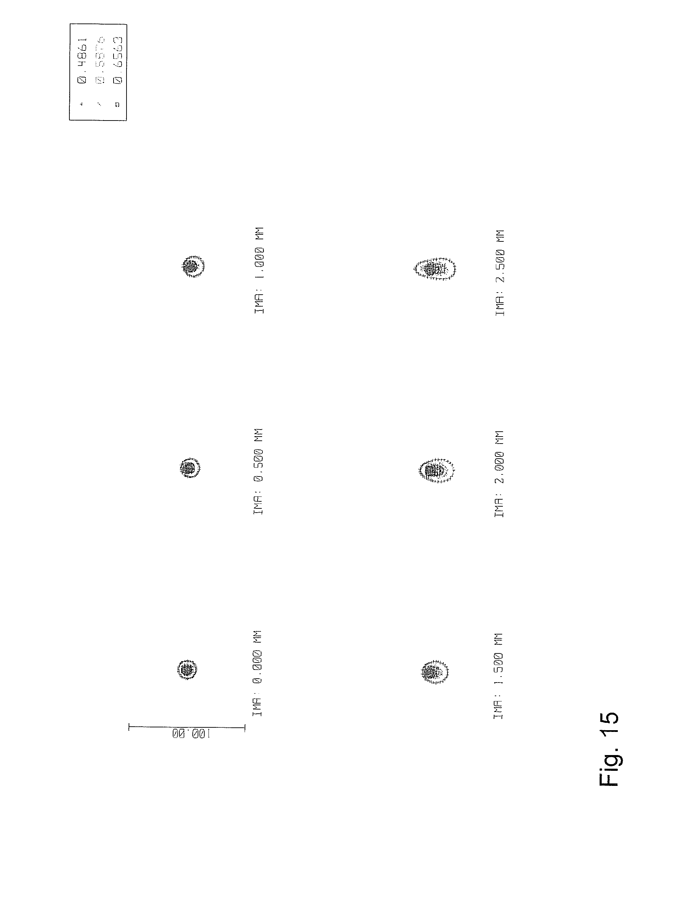

Fig. 13 to 18 relate to a juxtaposition of a conventional compact zoom lens and of a compact zoom lens according to another embodiment of the present invention. Fig. 13 shows a compact zoom lens which has a diffractive element 6 in the sense of the present invention as indicated by the bold line on the right-hand side of Fig. 13. The diffractive optical element 6 is made or provided directly on a transparent cover disk 20 for covering a detector array 21, for example a CCD chip. The associated optical properties can easily be derived from Fig. 14 and 15 by one skilled in the art.

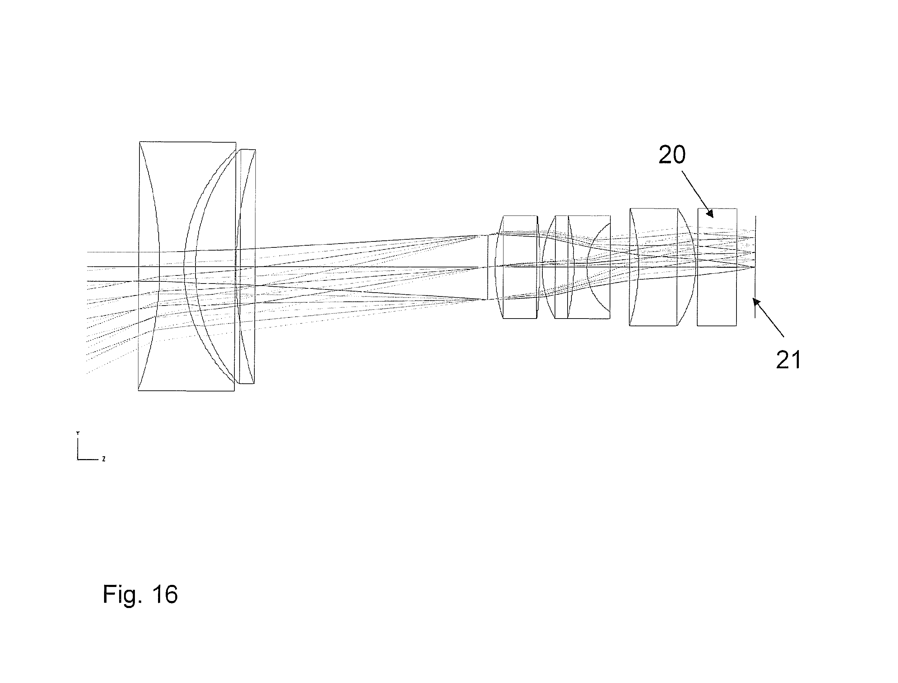

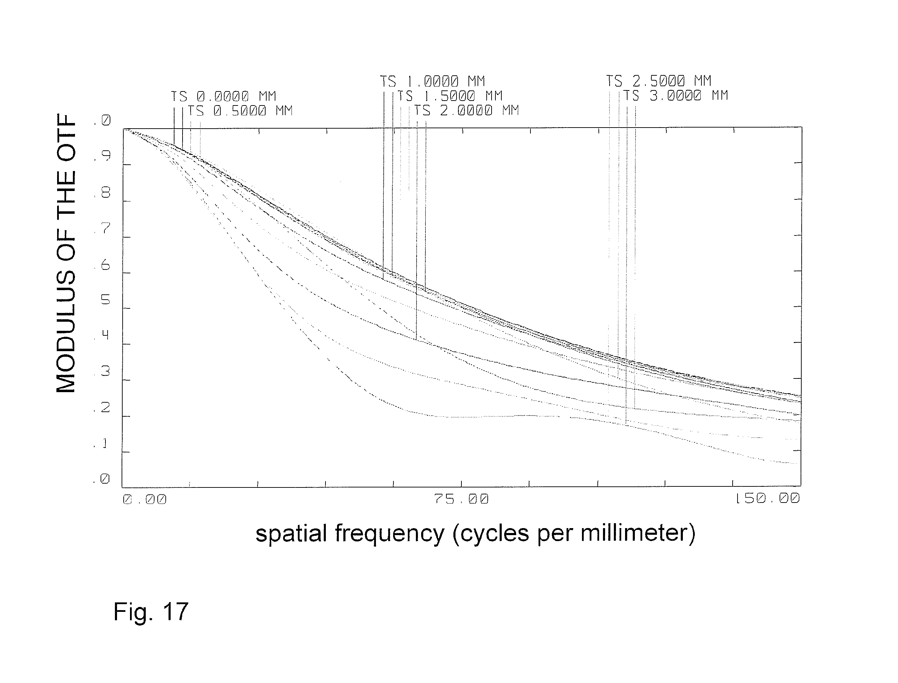

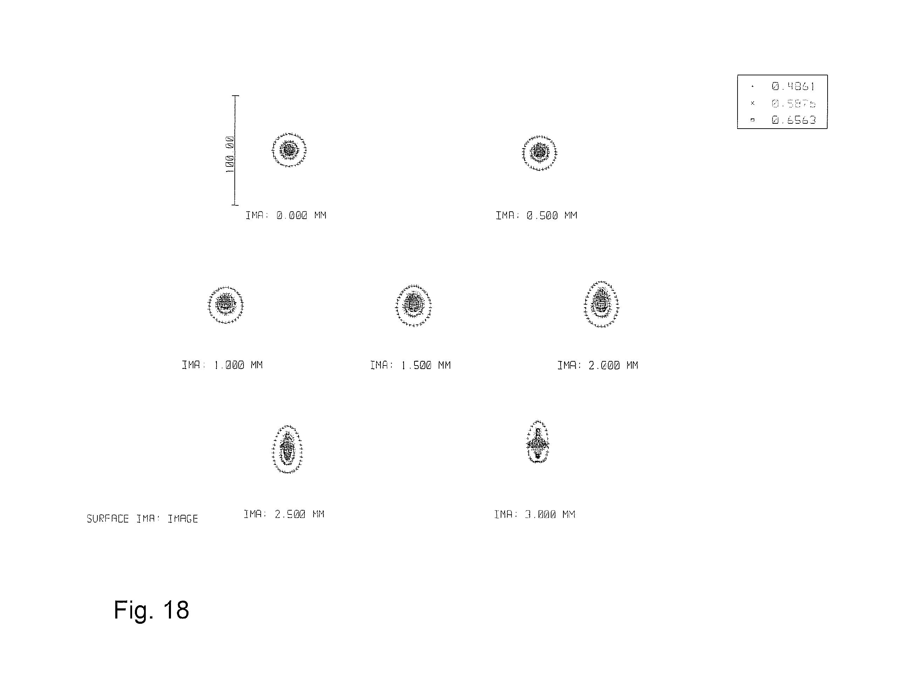

Fig. 16 shows for reference a compact zoom lens of comparable structure and layout, which does not have a diffractive optical element. The associated optical properties can be derived with ease by one skilled in the art from Fig. 17 and 18.

By comparing Fig. 13 to 15 and 16 to 18, the improvement in the optical imaging properties, particularly with respect to chromatic aberrations, can be seen with ease. In particular, errors regarding the phase front of the light to be imaged as well as chromatic errors can be substantially improved by means of the at least one diffractive optical element in a surprisingly simple manner according to the invention.

As will become apparent to a person skilled in the art when studying Fig. 13 to 18, the diffractive element may also be disposed on other lens surfaces of the compact zoom lens, in particular on a surface of the front lens, in particular on a rear surface thereof.

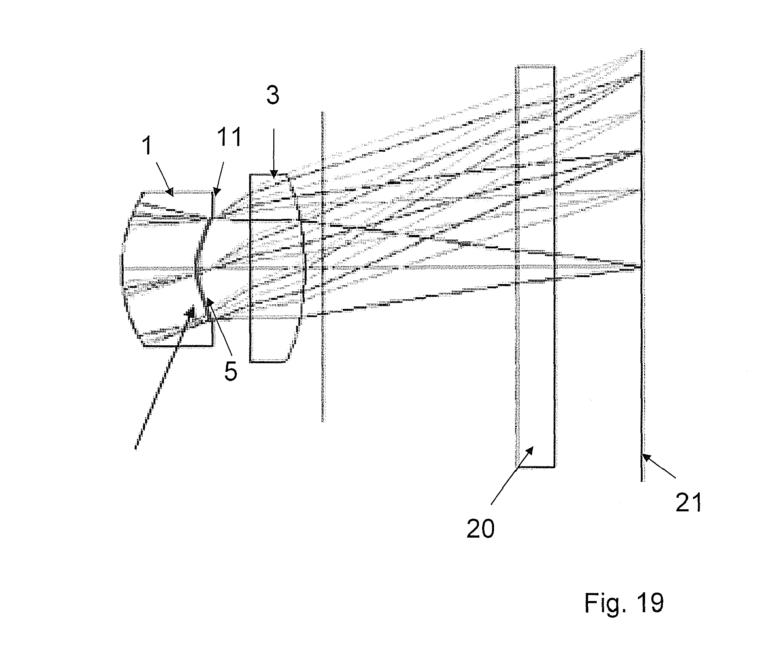

Fig. 19 shows a compact lens of fixed focal length according to another embodiment of the present invention. The compact lens comprises a convex-concave front lens 1 and a plano-convex lens 3 disposed in front of the transparent cover 20. As shown in Fig. 19, a diffractive optical element 5 is provided directly on the rear side 11 of front lens 1. As will become apparent for a person skilled in the art, a diffractive optical element may also be provided on one of the surfaces, in particular the rear side, of a hybrid or compound lens at the front end of the lens according to the present invention, e.g. of the front lens shown in Fig. 1. Thus, the advantageous reduction of the overall length of the compact lens can be combined with a low chromatic aberration due to provision of the diffractive optical element on a surface of the front lens.

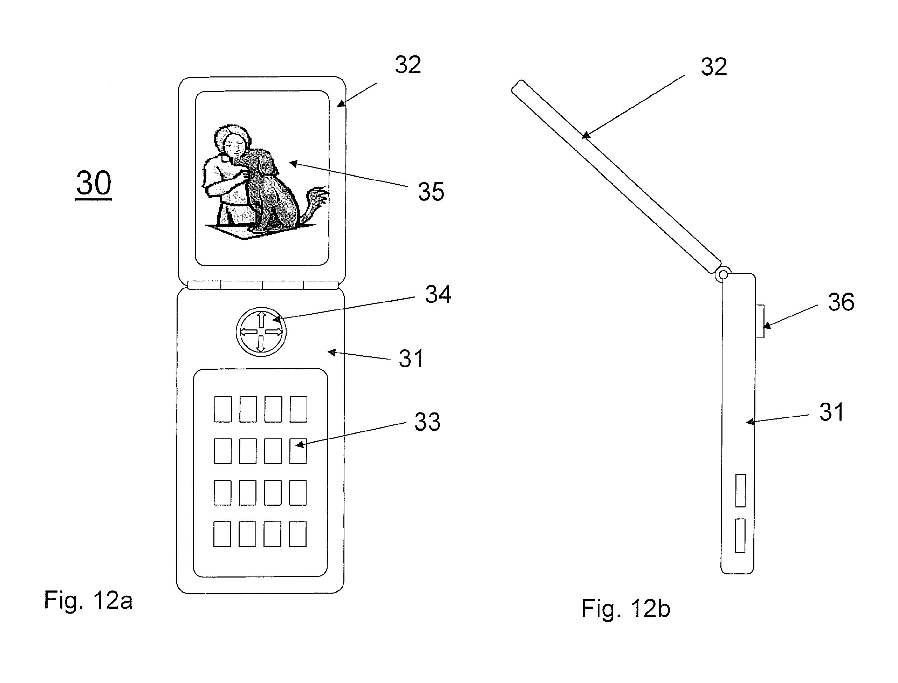

As can be seen with ease by one skilled in the art, the lens according to the invention can be used in any optical devices in the fields of consumer optics, industrial optics or even in the automotive domain. By way of example the following is listed: lenses of mobile digital devices, such as for example cell phones, PDAs, portable data terminals. Fig. 12 shows one example of such an application in detail. According to Fig. 12, the cell phone 30 comprises a lower portion 31 and an upper portion 32, which are interconnected via a hinge, the lower portion in the known manner comprising a keypad 33 and a selector switch 34 for the cell phone functions, such as, e.g., telephoning, SMS, PDA, data storage, data downloads, photographing. According to the present invention a display is provided at the front side of the upper portion 32 and a lens 36 is provided on the rear side.

### List of Reference Numerals

- 1: Lens
- 2: Lens
- 3: Lens
- 5: Diffractive optical element
- 6: Diffractive optical element

- 8: Lens intermediate space
- 9: Lens intermediate space
- 10: Front side of lens 1
- 11: Rear side of lens 1

- 13: Rear side of lens 2

- 15: Front side of lens 3
- 16: Rear side of lens 3

- 20: Transparent cover
- 21: Detector array
- 22: Housing

- 30: Cell phone
- 31: Lower portion
- 32: Upper portion
- 33: Keypad
- 34: Selector switch
- 35: Display
- 36: Lens

## Claims

1. A compact lens with fixed focal length for digital image acquisition, having two or three refractive optical elements (1-3) and at least one diffractive optical element (5, 6) to image incident light onto a detector array (21), at least one diffractive optical element (6) being provided on a refractive optical element (1-3), **characterized in that** a refractive optical element of the lens is provided as a compound lens with a first lens element (1) from a glass or optical ceramics with a first index of refraction and a second lens element (2) from a plastic with a second index of refraction which is smaller than the first index of refraction, the first lens element (1) being located on the beam path in front of the second lens element (2) and on a light entry side of the lens.

2. A compact zoom lens with variable focal length for digital image acquisition, having at least two imaging optical element groups and at least one diffractive optical element to image incident light onto a detector array, **characterized in that** a refractive optical element of an element group on a light entry side of the lens is provided as a compound lens with a first lens element from a glass or optical ceramics with a first index of refraction and a second lens element from a plastic with a second index of refraction which is smaller than the first index of refraction, the first lens element being located on the beam path in front of the second lens element and on the light entry side of the lens.

3. The compact lens according to any of the preceding claims, whereby the plastic is selected from a group of plastics comprising the following: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes, and silicones.

4. The compact lens according to any of the preceding claims, whereby the two lens elements (1, 2) of the compound lens are provided as single lenses and are interconnected by material bonding.

5. The compact lens according to any of the preceding claims, whereby at least one diffractive optical element (6) is made or provided directly on or at a transparent cover (20) for covering the detector array (21).

6. The compact lens according to claim 5, whereby the diffractive optical element is made integral with the transparent cover (21).

7. The compact lens according to claim 5, wherein the diffractive optical element is formed on a surface of said compound lens.

8. The compact lens according to any of the preceding claims, whereby the diffractive optical element is formed by stamping or hot stamping or by hot forming of a surface of the transparent cover or of an imaging refractive optical element.

9. The compact lens according to any of the preceding claims, whereby an overall length L of the lens is smaller than or equal to a focal length f of the lens: L ≤ f.

10. The compact lens according to any of the preceding claims, having two diffractive optical elements, wherein the two diffractive optical elements (5, 6) are provided or made in or on opposing boundary surfaces of two adjacent optical elements (3, 20), of which one optical element is a refractive optical element (3).

11. The compact lens according to claim 10, whereby the two diffractive optical elements (5, 6) are made from a material with the same index of refraction and whereby an intermediate space (9) between the two adjacent optical elements (3, 20) is filled with a transparent filler material with an index of refraction which is different from the index of refraction of the two diffractive optical elements (3, 20) and of the two adjacent optical elements (3, 20).

12. The compact lens according to claim 11, wherein the index of refraction and the thickness of the transparent filler material are selected such that the dependency of the light diffraction efficiency of the two diffractive optical elements (3, 20) on the wavelength of the light to be imaged is negligible.

13. The compact lens according to claim 11 or 12, wherein the filler material in the intermediate space (9) is a plastic or a polymer whose Abbe coefficient is smaller than the Abbe coefficient of the material of the diffractive optical elements (5, 6).

14. The compact lens according to claim 13, wherein the diffractive optical elements (5, 6) are of plastic.

15. The compact lens according to claim 14, wherein the diffractive optical elements (5, 6) are made from a plastic that is chosen from a group comprising the following: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes, and silicones; and wherein the intermediate space (9) is filled with a different plastic or polymer.

16. The compact lens according to any of claims 8 to 13, in which the diffractive optical elements (5, 6) are made from a glass with a low processing temperature Tg, preferably with a processing temperature Tg < 1000°C, and more preferably with a processing temperature Tg < 700°C.

17. The compact lens according to claim 16, in which the diffractive optical elements (5, 6) are made from a glass; and in which the intermediate space (9) is filled with a plastic or a polymer that is chosen from a group comprising the following: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes, and silicones.

18. The compact lens according to claim 16, in which the diffractive optical elements (5, 6) are made of optical ceramics; and in which the intermediate space (9) is filled with a plastic or polymer that is chosen from a group comprising the following: polymethylmethacrylate (PMMA), polycarbonate (PC), polymethylmethacrylimide (PMMI), polystyrene (PS), poly(styrene-co-acrylonitrile) (SAN), cycloolefin copolymers (COC), cycloolefin polymers (COP), methylpentene copolymers (PMP), polyethylene terephthalate (PET), polyurethanes, aliphatic polyurethanes, and silicones.

19. The compact lens according to any of claims 14 to 18, whereby the diffractive optical elements (5, 6) are formed from diffractive raised sections and with a maximum height H given by: H ≤ N λ k / Δn,
λ being the minimum wavelength of the light to be imaged,
Δ n being an absolute value of a difference of the index of refraction of the material of the diffractive optical elements (5, 6) and of the filler material, and
N being an integer number between N=1 and N=20.

20. The compact lens according to any of the preceding claims, whereby the diffractive optical element (5, 6) is made by means of hot forming, particularly hot stamping, of one surface of an optical lens (1-3) or of an optical element (20).

21. The compact lens according to any of the preceding claims, whereby the diffractive optical element (5, 6) is respectively made by means of a surface structuring process, such as, for example, etching, particularly WCE, RIE, IBE or CAIBE, or else by means of laser ablation processes, particularly by means of UV laser or femto-second laser, or else by means of additive vapor deposition processes on an optical lens (1-3) or an optical element (20).

22. A digital image acquisition device, with a detector array (21) for digital image acquisition, **characterized by** a lens (36) according to any of the preceding claims.

23. The digital image acquisition device according to claim 22, which is provided as a cell phone camera (30) or a mobile information technology device.
